# EUROPEAN PATENT SPECIFICATION

(11) **EP 0 404 242 B1**
(45) Date of publication and mention of the grant of the patent: **11.08.1993**
(21) Application number: 90201570.0
(22) Date of filing: 18.06.1990
(51) Int. Cl.: G01D 5/26, G01B 11/18

(54) **Method and device based on fibre-optic interferometer sensors, for analyzing the dynamic deformation of a structure or its components**
Verfahren und Gerät, basierend auf faseroptischen Interferometersensoren, zur Analysierung der dynamischen Entstellung einer Struktur oder ihrer Komponenten
Méthode et appareil basé sur des détecteurs interférométriques fibre-optiques, pour analyser les déformations dynamiques d'une structure ou des composants d'une structure

(30) Priority: 23.06.1989 IT 2096389
(43) Date of publication of application: 27.12.1990
(73) Proprietor: AGIP S.p.A., 20121 Milano (IT); C.I.S.E.-Centro Informazioni Studi ed Esperienze S.p.A., I-20123 Milan (IT)
(72) Inventor: Campelli, Paolo, I-26020 Cavatigozzi(Cremona) (IT); Martinelli, Mario, I-20097 San Donato Milanese(Milan) (IT)
(74) Representative: Fusina, Gerolamo

(56) References cited:
- EP-A- 0 278 143
- GB-A- 2 136 113
- GB-A- 2 144 215
- GB-A- 2 147 759
- US-A- 4 788 868
- PATENT ABSTRACTS OF JAPAN, vol. 9, no. 174 (P-374)[1897], 19th July 1985; & JP-A-60 50 402

## Description

This invention relates to a method and device as defined in claims 1 and 5 for measuring the dynamic deformation of a structure or parts thereof, for the purpose of determining the variation in this deformation when subjected to forces which vary in intensity and direction with time.

More particularly, the method and device according to the invention relates to the determination of dynamic deformation in bodies which are of difficult accessibility and/or are in a hostile environment, so that the use of traditional measuring devices such as conventional extensometers or accelerometers is impracticable or ineffective.

Determining the variation in the deformation of a body subjected to forces which vary with time is useful with a view to knowing its behaviour, such as its vibration modes and the distribution and type of stresses in its interior, knowing the stresses which it receives from the outside and which would otherwise be undeterminable with sufficient accuracy, knowing which suitable remedies to adopt in order to prevent damage to the body, and for diagnostic purposes in ascertaining the state of the structure.

The present invention is described by way of non-limiting example with reference to a typical embodiment in the crude oil industry, and in particular to the upwardly extending pipes, commonly known as risers, which connect the well heads of underwater hydrocarbon deposits to platforms (such as TLPs, ie tension leg platforms) at the sea surface or to floating means retained in position by other connections to the sea bed which are kept under tension by the buoyancy thrust and/or by propellers.

It is apparent that the device according to the invention can also be used to determine dynamic deformation in other technical fields, such as in lattice structures or their components subjected to variable loads or to periodic stresses, such as bridges of lattice structure, cranes, lattice structures for long-distance power lines, machine parts etc.

In the described embodiment relating to risers, the riser pipe is one of the most delicate parts of the infrastructure concerned in the working of underwater hydrocarbon deposits, in that breakage of the riser would result both in environmental damage and in lengthy interruption to the working of the deposit, with considerable expense involved in its restarting.

Such risers are kept as far as possible free from the anchoring forces involved in maintaining the platform or floating craft in its correct position relative to the sea bed, however because of the effect of wave motion, wind, tides and currents, the riser is also involved in periodic movements and stresses, which have to be continuously monitored.

In measuring the deformation, the device according to the invention effects extensometric measurements with optical fibres. Basically, a fibre-optic transducer converts its undergone deformation into modulation of the main parameters of the conveyed light, ie intensity, polarization and phase.

Fibre-optic extensometer transducers are known which separately utilize each of these types of modulation, either by direct measurement or by indirect measurement.

In the case of direct measurement, the optical fibre is rigidly connected to that part of the structure under examination. In the case of indirect measurement, the structure deformation is made to act on a device which itself contains the optical fibre. When used to solve the technical problem towards which the present invention is directed, fibre-optic extensometer sensors for measuring intensity modulation are able to provide absolute deformation measurements but have numerous drawbacks, such as non-linearity of the sensitivity and measurement characteristics, limited measurement bases, limited frequency response, and poor system reliability.

Likewise, extensometer sensors for measuring polarization modulation have drawbacks in terms of non-linearity of the sensor and high sensitivity to disturbances.

Phase-modulation sensors of autointerferometer type are linear and simple, but have other drawbacks such as the need for access to both ends of the fibre, and frequency modulation problems.

In contrast, the device of the invention is based on the use of fibre-optic sensors with interferometer measurement of phase modulation, using laser sources to measure vibration and slow deformation.

These measurement sensors are described in European Patent 64789 and U.K. Patent 2144215 which relate to the effecting of measurements undisturbed by environmental disturbances, by suppressing the noises concerned in transmission via optical fibre.

In these sensors the optical fibre, rigidly connected to the deforming mechanical structure, undergoes a modification in its geometrical and optical characteristics such as to induce a phase lag in the guided light.

The relationship between the integral of the deformation impressed on the fibre and the measured phase displacement of the light beam is linear over the whole measurement range.

Description of figures:
Fig 1 General illustration of present invention
Figs 2 & 3 Typical embodiment of present invention
Fig 4 Electro-optical unit.

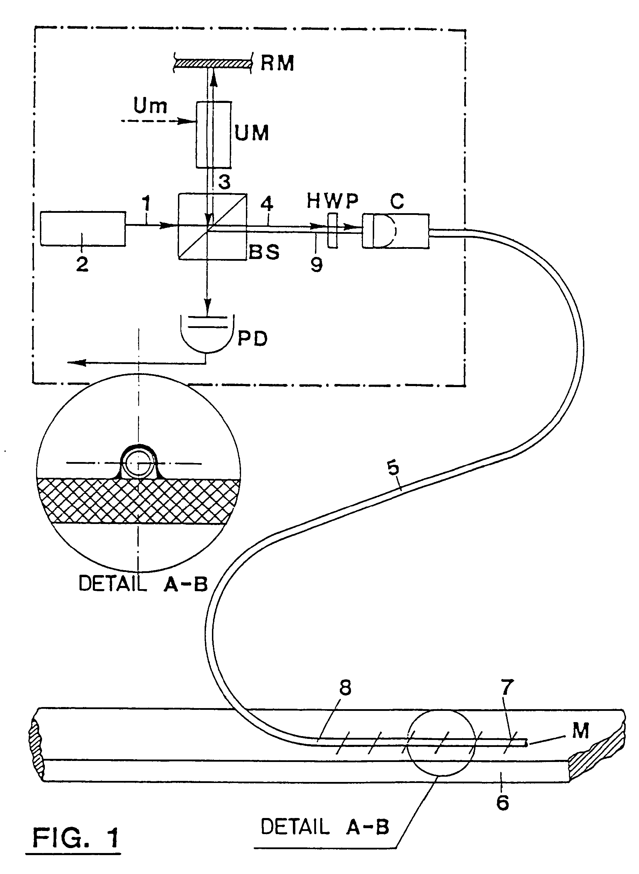

The fibre-optic interferometer sensor used in the present invention is illustrated in its most general sense in Figure 1 in terms of its construction and operation.

The beam 1 from the laser source 2 is split into two parts by the splitter BS to form the reference light beam 3 and the measurement beam 4. This latter proceeds to the connector C and is then fed via a suitable conventional optical focusing system, not shown, into the sensor optical fibre 5.

This optical fibre is made specular at its end M by depositing a suitable thin reflecting film on its flat end face. To prevent fluctuation in the state of polarization of the light conveyed along the fibre by the beam 4 which may arise due to any small-radius curvatures in the fibre, it can be advantageous to use a polarization-maintaining fibre. In this case the delay plate HWP causes the polarization plane of the entering light to coincide with one of the two main birefringence planes of the optical fibre. The return light beam from the optical fibre 5, having passed through it in both directions after starting from HWP, undergoing reflection at M and returning in the opposite direction, conveys the information required for the measurement, ie the optical phase modulation.

This optical phase modulation is proportional to the state of deformation of the fibre.

The optical fibre 5 is used as a deformation sensor by rigidly connecting its end portion 7, between 8 and M, to a body 6 to be measured. More specifically, the sensor for measuring the deformation of the body 6 over that body portion between 8 and M consists of the optical fibre portion 7.

The optical return signal 9 is made to interfere with the reference beam 3 in BS. At this point the reference beam 3 has already passed through the modulator UM twice, having been reflected in the mirror RM. The purpose of the modulator UM, fed with the modulation command Uₘ, is to provide the interferometer system with suitable frequency translation to allow better reconstruction of the phase signal, including the sign of the mechanical deformation phenomenon. The interferometer signal generated in BS is detected by a photodetector PD and fed to the electronic unit for signal demodulation.

The extensometer sensor of the type proposed herein is extremely advantageous for the following reasons:
- extreme sensitivity
- practically unlimited measurement base
- linearity of sensor response
- great flexibility of application, in terms of the system geometry
- large passband
- large dynamic acceptance in the measured deformation values.

The device according to the invention uses a plurality of phase-modulation fibre-optic interferometer sensors.

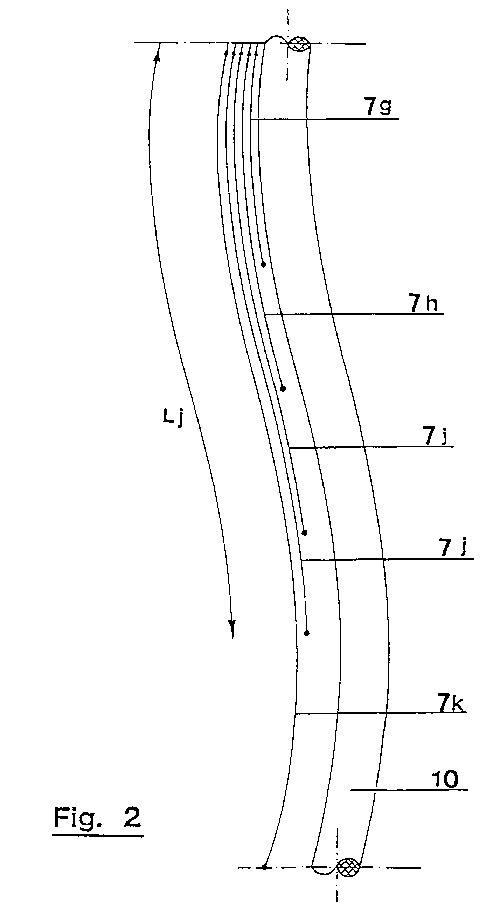

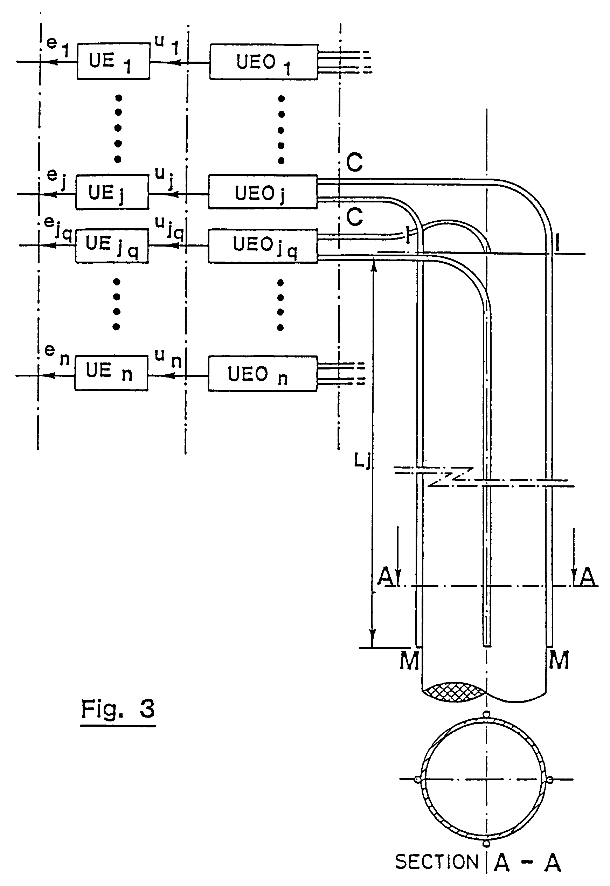

It is described with reference to Figures 2 and 3, which show a typical embodiment thereof by way of non-limiting example.

As shown in Figure 2 the optical fibres of the sensor are bunched parallel to each other into a bundle in which each optical fibre starts at the same level but is of different length L, and is therefore able to measure the deformation occurring over the length L of that portion of the structure to which it is rigidly connected.

The optical fibres can also be combined into a cable and fixed to the structure, but according to a preferred embodiment of the invention the bundle of different-length parallel fibres is inserted into a protective sheath, for example of stainless steel, which is then fixed to the structure. By way of example, the sheath can be fixed to the structure by either a continuous or spot weld using weld material and possibly with an interposed convex insert, or by adhesive, or by binding. Once this sheath has been fixed, it deforms in the same manner as the structure, as do the optical fibres contained in it.

The various optical fibres 7ₐ.......7ⱼ....., of length Lₐ.......Lⱼ..... respectively, constitute the extensometer sensor applied to the structure, and measure its deformation over the lengths Lₐ.......Lⱼ..... through which they are rigidly fixed to it, this structure being shown as a pipe.

To obtain proper information, the deformation reconstruction must be based on the parallel analysis of a large number of signals originating from different lengths of the structure under consideration, in order to obtain the variation in the deformation along the structure.

It is also necessary to reconstruct the spatial deformation of the structure by determining it with respect to two mutually perpendicular planes, and further necessary to eliminate the axial deformation component due to the presence of the axial load acting on the riser to which the present embodiment relates, this load being represented at least by its own weight.

These requirements are satisfied by a preferred embodiment of the invention, shown in Figure 3, in which the phase-modulation fibre-optic sensors are divided into a plurality of identical bundles and arranged on the structure as a double assembly of sensors placed in quadrature.

An assembly of modular electro-optical units UEO converts the phase modulation induced by the deformation into an analog electrical output signal u. Each unit UEO is associated with two optical fibres arranged in differential configuration, so that only the deformation states due to flexure are measured. Over each portion of length Lⱼ a double pair of sensors j and jq are placed to allow the point-reconstruction of the deformation in two mutually perpendicular plains.

For n measurement points there are 4n extensometer sensors and 2n electro-optical units.

The signal uⱼ from UEOⱼ is processed in the electronic unit UEⱼ and fed in analog form to the data collection system. The signal eⱼ is directly proportional, with a known fixed proportionality constant, to the phase modulation value.

The fibre portion CI is sensitive to the "non-common" noise due to deformation or vibration.

This noise can be eliminated with the devices described in U.K. Patent No. 2 144 215 or can be satisfactorily reduced by making the portion CI as short as possible and maintaining it in a constant position, ie as immune from deformation as possible. The optical fibre portion IM represents the extensometer sensor and is allowed to deform rigidly with the tubular body 10.

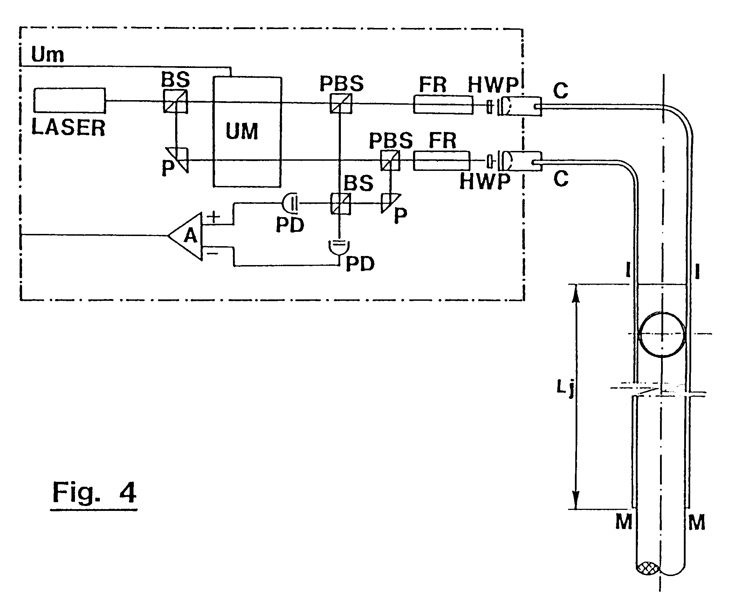

The schematic of the unit UEO is shown in Figure 4, this fibre-optic interferometer schematic being of Michelson type with frequency shifting or modulation.

The arriving laser signal is split in BS into two signals and fed to a modulation unit UM which provides the frequency shift.

This shift is very convenient for the purpose of completely reconstructing the progress of the deformation with the appropriate sign.

The two laser beams from UM are fed into the optical fibres via the components indicated by PBS, FR and HWP. These components have the following functions:
- to prevent the return signal through the optical fibre again interfering in the direction of the component BS and the laser;
- to recover the entire signal originating from the optical fibre;
- to feed the laser beam into the optical measuring fibre with the correct polarization.

The beams from the laser are fed into the polarization-maintaining fibres along the main birefringence axis and are reflected at the mirror-surfaced fibre end M. The polarization-maintaining fibre is a single-modal fibre with the characteristic property, given its high birefringence, of having two main propagation planes in which a linearly polarized light substantially maintains its polarization state. The use of such optical fibre prevents disturbances due to polarization fluctuations while maintaining good interferometer sensitivity characteristics.

The return light collected by the separators PBS is recombined by interference in BS.

The photodiodes PD arranged in differential configuration result in rejection of the common mode intensity noises.

The signal uⱼ from the amplifier A is fed to the electronic processor unit UE which also contains the programmable carrier generator feeding the unit Um with the signal Uₘ, and the demodulation chain. The signal uⱼ is fed to a frequency demodulation stage and integrator. The output eⱼ is the required analog signal proportional to the difference in phase modulation between the optical fibres, and this is proportional to the difference in deformation between the two generators of the riser. The extensometer device according to the invention has numerous advantages, including the following.

Its reliability is sufficiently high to allow its use in an unmanned hostile environment, because only the fibre-optic sensors, covered by a sheath or combined into a cable, are exposed to the hostile environment while the remainder of the device is located in a protected environment.

The small transverse dimension of the optical fibre bundle plus its protection, just a few millimetres in total, means that there is no disturbance to the hydrodynamic characteristics of the riser and no need for modifications to be made to the riser itself. The device allows high-accuracy determinations to be made within a large range of measurement by linear transducing of complex quantities, and with ample dynamic acceptance.

Furthermore, it is simple to form and install because of its modular construction, which also enables it to be easily adapted to widely differing structures.

The device also has the advantageous characteristic of differential application in which both the measurement beam and reference beam are conveyed in different fibres, allowing rejection of all common-mode external stresses.

## Claims

1. A method for analyzing the dynamic deformation of a structural component by comparing, in a fibre-optic interferometer having a reflecting surface at its distal end, the modulation difference between a first measuring laser beam which has flowed through a first optical fibre bundle in both directions, and a second measuring laser beam which has flowed in both directions through a second optical fibre bundle of a length equal to that of the first fibre bundle, each fibre bundle being comprised of a plurality of fibres of different lengths, the fibre bundles being arranged on opposite sides of said structural component, characterized by comprising the steps of:
(a) detecting the phase modulation of the light;
(b) carrying out the measurement of the deformation of the structure component concerned by measuring the length variation taking place in a set of structure portions of increasing lengths, each portion completely containing all the portions of the series of shorter length and having rigidly fastened thereto fibre-optic sensor portions of the same length, to reconstruct the structure deformation, and
(c) measuring the length variations by detecting the phase delay between said first measuring laser beam and said second measuring laser beam on the basis of the slippage of the interference fringes produced by the impingement of said light beams onto a beam splitter which recombines said beams.

2. Method according to Claim 1, wherein the determination of a single-plane deformation of each structural component is carried out by comparing the portional length variations along opposed faces or generating lines of the structure.

3. Method according to Claim 1, wherein the measurement of the spatial deformation of the structure is made by measuring and comparing the length variations along two or more pairs of faces or generating lines lying in quadrature.

4. Method according to Claim 1, wherein the frequencies of both the first and the second measuring laser beams are modulated.

5. A fibre-optic interferometer system for analyzing dynamic deformations of a structure with the method according to Claim 1, comprising:
optical fibre bundles each comprising
(a) a plurality of optical fibres (7g, 7h, 7i, 7k) having various lengths which are bunched parallel and are rigidly connected to the structure (10) to be analyzed;
(b) a modular electronic unit (UEO) which processes signals sent along the optical fibres (7g, 7h, 7i, 7k) and consists of:
(A) means (LASER) for originating a measuring laser beam;
(B) means (BS) for splitting said measuring laser beam into a first measuring laser beam and a second measuring laser beam;
(C) means (UM) for modulating said first and second measuring laser beams;
(D) means (PBS, FR and HWP) for passing said first measuring laser beam with the correct polarization through a first optical fibre bundle with a reflective distal end (M);
(E) means (PBS, FR and HWP) for passing said second measuring laser beam with the correct polarization through a second optical fibre bundle with a reflective distal end (M);and for preventing a response-measuring laser beam created by said first or second measuring laser beam reflecting on the distal end of the optical fibre from interfering with said first or second measuring laser beam;
(F) means (BS) for combining the first and the second response measuring laser beams (BS),
(G) means (PD) for rejecting common mode intensity noise, and
(H) means (A) for amplifying the combined signal from step (F), and
(c) an electronic unit (UE) which processes the signal exiting the fibre-optic interferometric sensor (j, jq) into an analog signal.

6. Fibre-optic interferometer system according to Claim 5, wherein said optical fibres (7g, 7h, 7i, 7k) are polarization-maintaining fibres.

7. Fibre-optic interferometer system according to Claim 5, wherein the optical fibres (7g, 7h, 7i, 7k) are divided into a plurality of identical bundles having varying length optical fibres and are arranged on the structure (10) to be analyzed as a double assembly of sensors in quadrature.

8. Fibre-optic interferometer system according to Claim 5, wherein the fibre bundle is combined into a cable core and inserted into a protective sheath.

9. Fibre-optic interferometer system according to Claim 5, wherein the light beam input end of each optical fibre lies in a plane perpendicular to the fibre axis.

10. Fibre-optic interferometer system according to Claim 5, wherein the fibre bundle has the same length as the structural component to be analyzed and is secured parallely thereto.

## Patentansprüche

1. Verfahren zur Analyse einer dynamischen Verformung eines Strukturbauteiles, indem in einem faseroptischen Interferometer, das eine reflektierende Oberfläche an seinem distalen Ende aufweist, die Modulationsdifferenz zwischen einem ersten Meß-Laserstrahl, der durch ein erstes optisches Faserbündel in beide Richtungen gewandert ist, mit einem zweiten Meß-Laserstrahl verglichen wird, der in beide Richtungen durch ein zweites optisches Faserbündel mit einer Länge, die gleich der des ersten Faserbündels ist, gewandert ist, wobei jedes Faserbündel aus einer Vielzahl von Fasern unterschiedlicher Längen gebildet ist, und die Faserbündel an gegenüberliegenden Seiten des Strukturbauteils angeordnet sind, gekennzeichnet durch die Schritte:
(a) Erfassen der Phasenmodulation des Lichts;
(b) Durchführen der Messung der Verformung des betroffenen Strukturbauteils, durch Messen der Längenänderung, die in einem Satz von Strukturabschnitten mit zunehmenden Längen stattfindet, wobei jeder Abschnitt alle die Abschnitte der Serien kürzerer Länge vollständig enthält und an dem faseroptische Sensorabschnitte der gleichen Länge starr befestigt sind, um die Strukturverformung zu rekonstruieren und
(c) Messen der Längenänderungen durch Erfassen der Phasenverschiebung zwischen dem ersten Messen-Laserstrahl und dem zweiten Meß-Laserstrahl auf der Grundlage der Verschiebung der Interferenzmuster, die durch das Auftreffen der Lichtstrahlen auf einen Strahlteiler entstehen, der die Strahlen rekombiniert.

2. Verfahren nach Anspruch 1, bei dem die Bestimmung einer Verformung in einer Ebene jedes Strukturelementes durch Vergleichen der abschnittsweisen Längenänderungen längs gegenüberliegender Flächen oder erzeugender Linien der Struktur ausgeführt wird.

3. Verfahren nach Anspruch 1, bei dem die Messung der räumlichen Verformung der Struktur durch Messen und Vergleichen der Längenänderungen längs zwei oder mehr Paaren von Flächen oder erzeugender Linien ausgeführt wird, die in Quadratur liegen.

4. Verfahren nach Anspruch 1, bei dem die Frequenzen des ersten und des zweiten Meß-Laserstrahls moduliert werden.

5. Faseroptisches Interferometersystem zur Analyse dynamischer Verformungen einer Struktur mit dem Verfahren nach Anspruch 1, mit:
(a) optischen Faserbündeln, von denen jedes eine Vielzahl optischer Fasern (7g, 7h, 7i, 7k) mit unterschiedlichen Längen aufweist, die parallel gebündelt sind und starr mit der zu untersuchenden Struktur (10) verbunden sind;
(b) einer modularen elektronischen Einheit (UEO), die Signale verarbeitet, die über der optischen Fasern (7g, 7h, 7i, 7k) gesendet werden und folgendes aufweist:
(A) einer Vorrichtung (LASER) zur Erzeugung eines Meß-Laserstrahls;
(B) einer Vorrichtung (BS) zum Teilen des Meß-Laserstrahls in einen ersten Messen-Laserstrahl und einen zweiten Meß-Laserstrahl;
(C) eine Vorrichtung (UM) zum Modulieren des ersten und des zweiten Meß-Laserstrahls;
(D) Vorrichtungen (PBS, FR und HWP) zum Durchlassen des ersten Meß-Laserstrahls mit der richtigen Polarisation durch ein ersten optisches Faserbündel mit einem reflektierenden distalen Ende (M);
(E) Vorrichtungen (PBS, FR und HWP) zum Durchlassen des zweiten Meß-Laserstrahls mit der richtigen Polarisation durch ein zweites optisches Faserbündel mit einem reflektierenden distalen Ende (M) und zum Vermeiden, daß ein Antwort-Meß-Laserstrahl, der durch den ersten oder den zweiten Meß-Laserstrahl durch Reflektieren an dem distalen Ende der optischen Faser erzeugt wird, mit dem ersten oder dem zweiten Meß-Laserstrahl interferiert;
(F) einer Vorrichtung (BS) zum Kombinieren des ersten und des zweiten Antwort-Meß-Laserstrahls (BS);
(G) einer Vorrichtung (PD) zum Ausschalten von Intensitätsrauschen gemeinsamer Moden und
(H) einer Vorrichtung (A) zum Verstärken des kombinierten Signals aus Schritt (F); und
(c) einer elektronische Einheit (UE), die das aus dem faseroptischen interferometrischen Sensor (j, jq) austretende Signal in ein analoges Signal verarbeitet.

6. Faseroptisches Interferometersystem nach Anspruch 5, bei dem die optischen Fasern (7g, 7h, 79, 7k) polarisationserhaltende Fasern sind.

7. Faseroptisches Interferometersystem nach Anspruch 5, bei dem die optischen Fasern (7g, 7h, 7i, 7k) in eine Vielzahl identischer Bündel unterteilt sind, die optische Fasern unterschiedlicher Länge aufweisen und an der zu untersuchenden Struktur (10) als Doppelanordnung von Sensoren in Quadratur angeordnet sind.

8. Faseroptisches Interferometersystem nach Anspruch 5, bei dem das Faserbündel zu einer Kabelseele zusammengefaßt ist und in eine Schutzhülle eingesetzt ist.

9. Faseroptisches Interferometersystem nach Anspruch 5, bei dem das Lichtstrahl-Einlaßende jeder optischen Faser in einer zur Faserachse senkrechten Ebene liegt.

10. Faseroptisches Interferometersystem nach Anspruch 5, bei dem das Faserbündel die gleiche Länge wie das zu untersuchende Strukturbauteil hat und parallel daran befestigt ist.

## Revendications

1. Procédé pour analyser la déformation dynamique d'un composant structural par comparaison, dans un interféromètre à fibres optiques, comportant une surface réfléchissante à son extrémité distale, la différence de modulation entre un premier rayon laser de mesure qui a circulé le long d'un premier faisceau de fibres optiques dans les deux sens, et un second rayon laser de mesure qui a circulé dans les deux sens le long d'un second faisceau de fibres optiques d'une longueur égale à celle du premier faisceau de fibres, chaque faisceau de fibres étant constitué d'une pluralité de fibres de longueurs différentes, les faisceaux de fibres étant disposés de part et d'autre dudit composant structural, caractérisé par le fait qu'il comprend les étapes consistant :
(a) à détecter la modulation de phase de la lumière ;
(b) à effectuer la mesure de la déformation du composant structural concerné par mesure de la variation de longueur ayant lieu dans un ensemble de parties de structure de longueur croissante, chaque partie contenant complètement toutes les parties de la série de longueurs plus courtes et ayant, rigidement fixées à elle-même, les parties de détecteur à fibres optiques de la même longueur pour reconstituer la déformation de la structure, et
(c) à mesurer les variations de longueur par détection du retard de phase entre le premier rayon laser de mesure et le second rayon laser de mesure en se basant sur le glissement des franges d'interférence produit par l'arrivée des rayons lumineux sur un diviseur de faisceau qui recombine lesdits faisceaux.

2. Procédé selon la revendication 1, dans lequel on détermine la déformation dans un seul plan de chaque composant structural en comparant les variations de longueur partielle le long des faces opposées ou les lignes génératrices de la structure.

3. Procédé selon la revendication 1, dans lequel on effectue la mesure de la déformation spatiale de la structure en mesurant et en comparant les variations de longueur le long de deux ou de plus de deux paires de faces ou lignes génératrices disposées en quadrature.

4. Procédé selon la revendication 1, dans lequel on module les fréquences à la fois du premier et du second rayons laser de mesure.

5. Système interférométrique à fibres optiques pour analyser les déformations dynamiques d'une structure à l'aide du procédé selon la revendication 1, comprenant :
des faisceaux de fibres optiques comprenant chacun :
(a) une pluralité de fibres optiques (7g, 7h, 7i, 7k) ayant diverses longueurs qui sont coupées en faisceaux parallèles et qui sont raccordées rigidement à la structure (10) à analyser ;
(b) une unité électronique modulaire (UEO) qui traite les signaux envoyés le long des fibres optiques (7g, 7h, 7i, 7k) et consiste en :
(A) un moyen (LASER) pour émettre un rayon laser de mesure,
(B) un moyen (BS) pour diviser le rayon laser de mesure en un premier rayon laser de mesure et un second rayon laser de mesure,
(C) un moyen (UM) pour moduler les premier et second rayons laser de mesure,
(D) des moyens (PBS, FR et HWP) pour acheminer le premier rayon laser de mesure avec la polarisation correcte à travers un premier faisceau de fibres optiques ayant une extrémité distale réflectrice (M),
(E) des moyens (PBS, FR et HWP) pour acheminer le second rayon laser de mesure avec la polarisation correcte à travers un second faisceau de fibres optiques ayant une extrémité distale réflectrice (M), et pour empêcher un rayon laser de mesure de réponse créé par ledit premier ou second rayon laser de mesure réfléchissant l'extrémité distale des fibres optiques d'interférer avec les premier et second rayons laser de mesure,
(F) des moyens (BS) pour combiner les premier et second rayons laser de mesure de réponse (BS),
(G) un moyen (PD) pour une réjection d'un bruit d'intensité en mode commun, et
(H) un moyen (A) pour amplifier le signal combiné provenant de l'étape (F) ; et
(c) une unité électronique (UE) qui traite le signal sortant du détecteur interférométrique à fibres optiques (j, jq) pour le transformer en signal analogique.

6. Système interférométrique à fibres optiques selon la revendication 5, dans lequel les fibres optiques (7g, 7h, 7i, 7k) sont des fibres conservant une polarisation.

7. Système interférométrique à fibres optiques selon la revendication 5, dans lequel les fibres optiques (7g, 7h, 7i, 7k) sont divisées en une pluralité de faisceaux identiques comportant des fibres optiques de longueur variable et sont disposées sur la structure (10) à analyser sous la forme d'un ensemble double de détecteurs en quadrature.

8. Système interférométrique à fibres optiques selon la revendication 5, dans lequel le faisceau de fibres est combiné de manière à former l'âme d'un câble et est inséré dans une gaine protectrice.

9. Système interférométrique à fibres optiques selon la revendication 5, dans lequel l'extrémité d'entrée du faisceau lumineux de chaque fibre optique se trouve dans un plan perpendiculaire à l'axe de la fibre.

10. Système interférométrique à fibres optiques selon la revendication 5, dans lequel le faisceau de fibres a la même longueur que le composant de structure devant être analysé et est fixé parallèlement à ce dernier.
